# EUROPÄISCHE PATENTANMELDUNG

(11) **EP 1 777 279 A1**
(43) Veröffentlichungstag der Anmeldung: **25.04.2007**
(21) Anmeldenummer: 06021909.4
(22) Anmeldetag: 19.10.2006
(51) Int. Cl.: C09K 8/56, C09K 8/50, C09K 8/42

(54) **Verfahren zum Renaturieren von grossvolumig abgebauten Erdlagerstätten**

(30) Priorität: 19.10.2005 DE 102005050417
(71) Anmelder: Hirt, Wolfgang, 63654 Büdingen (DE)
(72) Erfinder: Hirt, Wolfgang, 63654 Büdingen (DE)
(74) Vertreter: Schumacher, Bernd

(57) **Zusammenfassung**

Die Erfindung betrifft ein Verfahren zum geomechanisch stabilisierenden Renaturieren von großvolumig abgebauten, natürlichen Erdlagerstätten.

Um durch menschliche Eingriffe erzeugten Veränderungen des Erdkörpers entgegen zu wirken und die natürlichen Verhältnisse möglichst weitgehend wiederherzustellen, wird erfindungsgemäß vorgeschlagen, daß in die durch Abbau entstandenen Hohlräume eine diese ausfüllende, unter Schwerkrafteinfluß zunächst fließfähige und sich nach dem Einfüllen allmählich verfestigende sowie die Abbausubstanz ersetzende Füllsubstanz eingebracht wird, deren spezifisches Gewicht im verfestigten Zustand masseausgleichend etwa demjenigen der Abbausubstanz entspricht.

Nach diesem Verfahren zu verfüllende Hohl- und Erdräume können solche von unterirdischen und oberirdischen Erdlagerstätten sein.

Hierdurch wird sichergestellt, daß die geomechanische Struktur sowie Stabilität und Massenverteilung der Erdkruste und des Erdmantels erhalten bleibt bzw. wiederhergestellt wird. Mit dem vorliegenden Verfahren wird ein immenser Beitrag zur gesamten Umweltverbesserung des Erdkörpers geleistet.

## Beschreibung

Die Erfindung betrifft ein Verfahren zum geomechanisch stabilisierenden Renaturieren von großvolumig abgebauten, natürlichen Erdlagerstätten.

Das Abbauen von großen Erdlagerstätten, wie solchen für Öl, Gas, Erz oder Kohle, stellt einen massiven Eingriff in die natürliche geomechanische Struktur der Erdkruste und des Erdmantels dar. Zum einen wird hierdurch die natürliche Stabilität der Erdkruste und des Erdmantels beeinträchtigt, und zum anderen ergeben sich hierbei grundlegende Veränderungen der natürlichen Erdmassengrößen sowie Erdmassenverteilungen.

Der vorliegenden Erfindung liegt die Aufgabe zugrunde, derartigen durch menschliche Eingriffe erzeugten Veränderungen entgegen zu wirken und die natürlichen Verhältnisse möglichst weitgehend wiederherzustellen.

Zur Lösung der gestellten Aufgabe zeichnet sich ein Verfahren der genannten Art gemäß dem Kennzeichen von Anspruch 1 dadurch aus, daß in die durch Abbau entstandenen Hohlräume eine diese ausfüllende, unter Schwerkrafteinfluß zunächst fließfähige und sich nach dem Einfüllen allmählich verfestigende sowie die Abbausubstanz ersetzende Füllsubstanz eingebracht wird, deren spezifisches Gewicht im verfestigten Zustand masseausgleichend etwa demjenigen der Abbausubstanz entspricht.

Unter einer zunächst fließfähigen Füllsubstanz ist hier eine solche Füllsubstanz gemeint, deren Grad der Dünnflüssigkeit gerade ausreicht, damit sich die Füllsubstanz unter Schwerkrafteinfluß großvolumig und großflächig ausbreiten kann.

Bei bisherigen Versuchen erfolgte ein Verfüllen unterirdischer Hohlräume stets ohne Berücksichtigung des spezifischen Gewichts der Abbausubstanz.

Verfüllungen von oberirdischen Erdräumen, wie abgebauten Steinbrüchen und Kohlenlagerstätten, wurden bisher nicht vorgenommen.

Durch die erfindungsgemäße Maßnahme von Anspruch 1 wird gewährleistet, daß die geomechanische Struktur sowie Stabilität und Massenverteilung erhalten bleibt bzw. wiederhergestellt wird, was unter Berücksichtigung der vielfach extrem großen Erdlagerstätten äußerst vorteilhaft und bedeutsam ist. Die anfängliche Fließfähigkeit der Füllsubstanz gewährleistet, daß sich diese unter Schwerkrafteinfluß großflächig sowie großvolumig ausbreiten kann. Da im Laufe der Zeit ein Verfestigen der Füllsubstanz erfolgt, wird verhindert, daß sich die Füllsubstanz später in andere, neu entstandene oder neu kommunizierende Erdräume verflüchtigt, was anderenfalls zu Instabilitäten des bereits sanierten Bereiches führen könnte. Außerdem kann durch das Verfestigen der Füllsubstanz die mechanische Stabilität der Erdlagerstätte verbessert werden, und durch die ungefähre spezifische Gewichtsanpassung läßt sich eine weitgehende Wiederherstellung der ursprünglichen Massenverteilung erreichen.

Mit der Maßnahme von Anspruch 2 ist es möglich, die ursprüngliche mechanische Stabilität der Erdlagerstätte weitergehend wiederherzustellen.

Gemäß den Ansprüchen 3 bis 7 können praktisch alle abbaubaren oberirdischen und unterirdischen Erdlagerstätten mit festen, flüssigen und/oder gasförmigen Abbausubstanzen im obigen Sinne geomechanisch renaturiert werden.

Es ist gemäß den Ansprüchen 8 und 9 bevorzugt, eine weitgehend beliebige Abfallstoffe enthaltende Füllsubstanz zu verwenden. Dadurch werden die zu entsorgenden Abfallstoffe einer sehr nützlichen Zweckbestimmung zugeführt.

Die Weiterbildung von Anspruch 10 ist wegen des geringen spezifischen Gewichts dieser hohlraumreichen Füllsubstanz vor allem für Erdlagerstätten mit gasförmigen Abbausubstanzen geeignet.

Demgegenüber eignet sich die Weiterbildung von Anspruch 11 eher für Erdlagerstätten mit festen oder flüssigen Abbausubstanzen.

Gemäß den Weiterbildungen der Ansprüche 12 bis 15 kann die Füllsubstanz einfach von oben in die zu verfüllenden Hohlräume unter Schwerkrafteinfluß einfließen oder aber in irgendeiner Weise in diese eingepreßt werden. Beim Einfüllen unter Schwerkrafteinfluß kann es sinnvoll oder erforderlich sein, daß die Füllsubstanz mit konstanter Geschwindigkeit nach unten eingebracht wird, wobei eine Gegendruckregulierung von unten hilfreich sein kann.

Mit einer schrittweisen Fülltechnik gemäß Anspruch 16 können ein vollständiges sowie gleichmäßges Verfüllen und sicheres Verfestigen der Füllsubstanz gewährleistet werden.
Durch den Zusatz bestimmter organischer Substanzen sowie Suspensionen, welche als Katalysator wirken, läßt sich das Erhärten der Füllsubstanz regulieren.

Vielfach befindet sich abzubauendes Erdöl nicht nur in großvolumigen Hohlräumen, sondern auch im Speichergestein. Zur vollständigen Nutzung auch dieses Erdöls ist es gemäß Anspruch 17 möglich, das erdölhaltige Speichergestein normal abzubauen, oberirdisch mit üblichen Trennmethoden vom restlichen Erdöl zu befreien und dann wieder in die durch Abbau entstandenen Hohlräume einzubringen, und zwar zusammen mit das entnommene, Erdöl ersetzender Füllsubstanz.

Die Erfindung wird nachfolgend an einem zeichnerisch dargestellten Ausführungsbeispiel näher erläutert. Es zeigen:
- Fig. 1: ein Ausführungsbeispiel in einer vereinfachten Übersichtsdarstellung und
- Fig. 2: den grundsätzlichen Verfahrensablauf nach dem Output-Input-Prinzip in einer Prinzipdarstellung

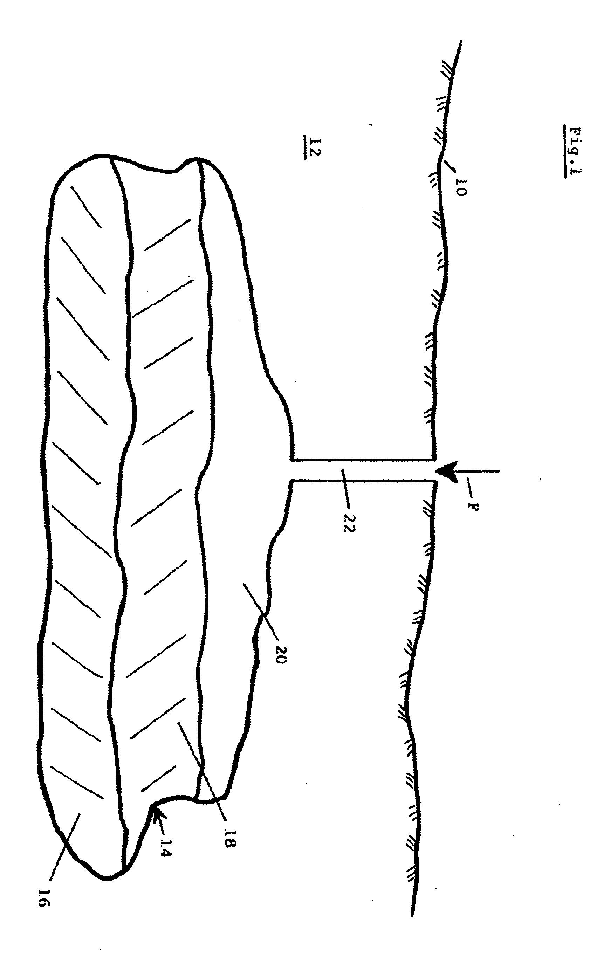

Gemäß der zeichnerischen Darstellung aus Fig. 1 befindet sich unterhalb der Erdoberfläche 10 im Erdmantel oder in der Erdkruste 12 ein unterirdischer Hohlraum 14 einer großflächigen sowie großvolumigen Erdlagerstätte, aus der die Abbausubstanz oder -substanzen, wie Erdöl und andere Bodenschätze, auf üblichem Wege entfernt wurden. Dieser Hohlraum 14 wird bei dem vorliegenden, besonders einfachen Fall an seinem zentralen, höchstliegenden Bereich über einen vertikalen Füllkanal 22 mit dem freien Raum oberhalb der Erdoberfläche 10 verbunden. Der Füllkanal 22 dient hier zum drucklosen Einbringen einer unter Schwerkrafteinfluß zunächst fließfähigen und sich später verfestigenden Füllsubstanz in Pfeilrichtung F. Die Füllsubstanz wird im vorliegenden Fall in Zeitabständen schrittweise zugeführt und bildet dadurch einzelne Füllschichten 16, 18. Gemäß der Darstellung ist zum vollständigen Verfüllen des Hohlraums 14 noch eine weitere Füllschicht 20 erforderlich.

Bei in Hohlräumen vorkommenden Spalten und Klüften, sowohl zum unteren Erdmantel (Magmaschicht) hin als auch zu seitlich benachbarten Begrenzungsflächen hin, ist beim Verfüllen der untersten Füllschicht 16 und der darüber einzubringenden Füllschichten 18, 20 zu beachten, daß die fließfähige Füllsubstanz in solchen Bereichen etwas dick- und zähflüssiger eingebracht wird. Mit einer dosierenden Zugabe von Erhärtungssuspensionen zur Füllsubstanz kann einem schnellen Entweichen des Füllguts entgegengewirkt werden.

Die in Pfeilrichtung F eingebrachte Füllsubstanz kann schließlich den Hohlraum 14 unter Schwerkrafteinfluß vollständig ausfüllen und somit die geomechanisch stabilisierende Renaturierung der Erdlagerstätte sicherstellen. Das beim Einbringen der Füllsubstanz aus dem Hohlraum 14 durch Verdrängung entweichende Gas, wie Luft, kann nach außen abströmen. Das kann insbesondere bei einem schrittweisen Verfüllen in den Füllpausen über den Füllkanal 22 erfolgen. Bei einem kontinuierlichen Verfüllen können andere Maßnahmen vorgesehen werden, wie wenigstens ein separater Entlüftungskanal.

Die Steuerung des für die Füllsubstanz notwendigen spezifischen Gewichts und der angestrebten Festigkeit sowie die Einbringung verschiedener Suspensionen und der die Füllsubstanz bestimmenden Materialien erfolgt von der Erdoberfläche 10 aus.

Bei der Renaturierung von Steinbrüchen in oberirdischen Bereichen ist bei der seitlichen Abgrenzung des zu verfüllenden Erdraums 14 zu beachten, daß dort ebenfalls eine dick- und zähflüssige Füllsubstanz mit schneller Aushärtung verwendet wird.

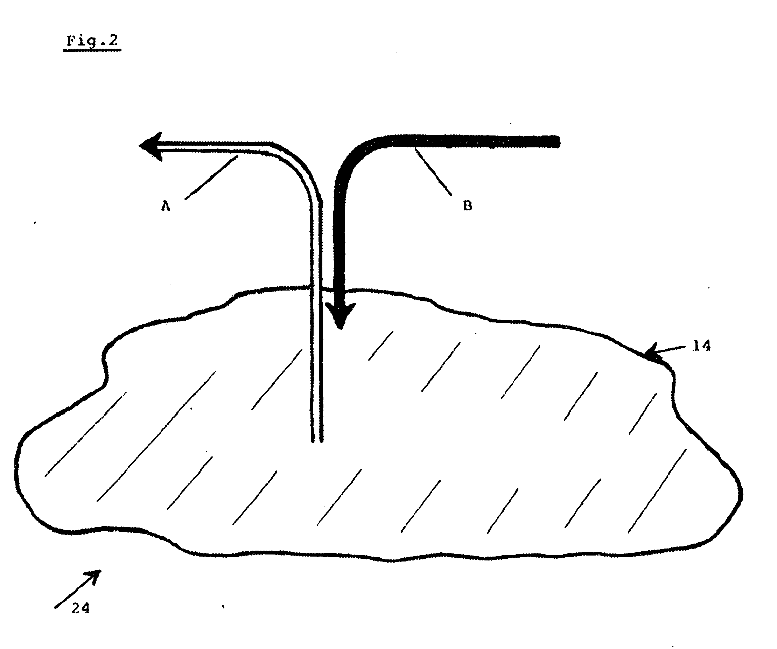

Gemäß Fig. 2 erfolgen nach dem Output-Input-Prinzip zunächst das Abbauen bzw. Entnehmen der Abbausubstanz (Bodenschätze) in Pfeilrichtung A und anschließend zum Renaturieren des beim Abbauen entstandenen Hohl- und Erdraums 14 der Erdlagerstätte 24 das Zuführen der Füllsubstanz in Pfeilrichtung B.

Die vorliegende Erfindung verfolgt streng den Grundsatz, daß alles das, was einem Bereich des Erdkörpers als Output entnommen wird, diesem Bereich als Input in Form einer entsprechenden Ersatzsubstanz wieder zugeführt wird.

Das Verfahren dient nicht nur zur Renaturierung von bereits abgebauten Erdlagerlagerstätten, sondern auch für die Renaturierung von Erdlagerstätten neuester und zukünftig entdeckter Bodenschätze im Erdkörper.

## Patentansprüche

1. Verfahren zum geomechanisch stabilisierenden Renaturieren von großvolumig abgebauten, natürlichen Erdlagerstätten,
**dadurch gekennzeichnet,**
**daß** in die durch Abbau entstandenen Hohlräume eine diese ausfüllende, unter Schwerkrafteinfluß zunächst fließfähige und sich nach dem Einfüllen allmählich verfestigende sowie die Abbausubstanz ersetzende Füllsubstanz eingebracht wird, deren spezifisches Gewicht im verfestigten Zustand masseausgleichend etwa demjenigen der Abbausubstanz entspricht.

2. Verfahren nach Anspruch 1, **dadurch gekennzeichnet, daß** die Füllsubstanz im verfestigten Zustand eine Festigkeit aufweist, die etwa der Festigkeit einer durch Abbau entnommenen Abbausubstanz entspricht.

3. Verfahren nach Anspruch 1 oder 2, **dadurch gekennzeichnet, daß** dieses zum Verfüllen von Erd- und Hohlräumen von oberirdischen und/oder unterirdischen Erz-, Edelmetall-, Edelstein- oder Salz-Erdlagerstätten benutzt wird.

4. Verfahren nach Anspruch 1 oder 2, **dadurch gekennzeichnet, daß** dieses zum Verfüllen von Erd- und Hohlräumen von oberirdischen und/oder unterirdischen Kohle-Erdlagerstätten, wie Braunkohle- oder Steinkohle-Erdlagerstätten, benutzt wird.

5. Verfahren nach Anspruch 1, **dadurch gekennzeichnet, daß** dieses zum Verfüllen von Hohlräumen von Erdöl-Erdlagerstätten benutzt wird.

6. Verfahren nach Anspruch 1, **dadurch gekennzeichnet, daß** dieses zum Verfüllen von Hohlräumen von Gas-Erdlagerstätten benutzt wird.

7. Verfahren nach Anspruch 1, **dadurch gekennzeichnet, daß** dieses zum Verfüllen von Steinbrüchen benutzt wird.

8. Verfahren nach einem der Ansprüche 1 bis 7, **dadurch gekennzeichnet, daß** eine zerkleinerbare Abfallstoffe enthaltende Füllsubstanz eingebracht wird.

9. Verfahren nach Anspruch 8, **dadurch gekennzeichnet, daß** eine Müll, Baustoffe und/oder Abbruchmaterial enthaltende Füllsubstanz eingebracht wird.

10. Verfahren nach einem der Ansprüche 1 bis 9, **dadurch gekennzeichnet, daß** eine im verfestigten Zustand schaumartige Füllsubstanz eingebracht wird.

11. Verfahren nach einem der Ansprüche 1 bis 9, **dadurch gekennzeichnet, daß** eine aus einer Zementschlemme oder aus Bentonit bestehende oder eine solche enthaltende Füllsubstanz eingebracht wird.

12. Verfahren nach einem der Ansprüche 1 bis 11, **dadurch gekennzeichnet, daß** die Füllsubstanz im wesentlichen zentral von oben in die Hohlräume eingebracht wird.

13. Verfahren nach einem der Ansprüche 1 bis 12, **dadurch gekennzeichnet, daß** die Füllsubstanz im wesentlichen an höchster Position der Hohlräume von oben in diese eingebracht wird.

14. Verfahren nach Anspruch 12 oder 13, **dadurch gekennzeichnet, daß** die Füllsubstanz von oben ausschließlich unter Schwerkrafteinfluß in die Hohlräume eingebracht wird.

15. Verfahren nach Anspruch 12 oder 13, **dadurch gekennzeichnet, daß** die Füllsubstanz von oben in die Hohlräume eingepreßt wird.

16. Verfahren nach einem der Ansprüche 1 bis 15, **dadurch gekennzeichnet, daß** die zunächst fließfähige Füllsubstanz schrittweise eingebracht wird und daß der Zeitabstand zwischen aufeinanderfolgenden Verfüllschritten so gewählt wird, daß dieser für ein zumindest weitgehendes Verfestigen der jeweils zuletzt eingebrachten Füllsubstanz ausreicht.

17. Verfahren nach einem der Ansprüche 1 bis 16, **dadurch gekennzeichnet, daß** beim Abbau und geomechanischen Renaturieren von Erdöl-Erdlagerstätten restliches Erdöl enthaltendes Speichergestein zunächst bergmännisch abgebaut sowie oberirdisch vom restlichen Erdöl befreit wird und daß dann das so behandelte Speichergestein zusammen mit der das insgesamt entnommene Erdöl ersetzenden Füllsubstanz in die durch Abbau entstandenen Hohlräume eingebracht wird.
